Europäisches Patentamt

European Patent Office

Office européen des brevets

(19)

(11)  EP 1 258 866 A2

(12)  EUROPEAN PATENT APPLICATION

(43) Date of publication:
    20.11.2002  Bulletin 2002/47

(21) Application number: 02010198.6

(22) Date of filing: 15.05.2002

(51) Int Cl.7: **G11B 5/86**
    // G11B5/82, G11B5/596

(84) Designated Contracting States:
    **AT BE CH CY DE DK ES FI FR GB GR IE IT LI LU
    MC NL PT SE TR**
    Designated Extension States:
    **AL LT LV MK RO SI**

(30) Priority:  15.05.2001  JP 2001144805

(71) Applicant: **FUJI PHOTO FILM CO., LTD.**
    **Kanagawa-ken, 250-01 (JP)**

(72) Inventors:
    • **Nishikawa, Masakazu**
      **Odawara-shi, Kanagawa-ken (JP)**
    • **Aoki, Masashi**
      **Odawara-shi, Kanagawa-ken (JP)**

(74) Representative: **HOFFMANN - EITLE**
    **Patent- und Rechtsanwälte**
    **Arabellastrasse 4**
    **81925 München (DE)**

(54)  **Magnetic transfer master medium**

(57)    Signal omissions are prevented from occurring in the magnetic data transferred to a slave medium (2) by magnetic transfer employing a magnetic transfer master medium. A master medium (3,4) formed of a material and having a thickness wherein the bow stiffness = $Ebd^3/12$ thereof is in the range greater than or equal to 0.03 N · m² and less than or equal to 27 N · m², for a sample piece thereof having a width defined of 1 m and an arbitrary lengthy and utilizing the Young's modulus E obtained by use of a vibration reed method on sample having a length of 50mm, an arbitrary width b, and a thickness d.

FIG.4

**Description**

BACKGROUND OF THE INVENTION

Field of the Invention

The present invention relates to a magnetic transfer master medium on which a magnetic layer pattern has been formed for transferring data to a magnetic recording medium.

Description of the Related Art

Generally speaking, with regard to magnetic storage mediums, there is a demand for increased storage capacity and low cost. Further desired are so-called high-speed access mediums, which are capable of advantageously reading out the data of a desired location in a short time, Examples of these mediums include hard disks and high-density flexible disks. So-called tracking servo technology, wherein the magnetic head accurately scans a narrow width track to achieve a high S/N ratio, plays a substantial role in attaining the high storage capacity thereof. A servo signal, address data signal, replay clock signal, etc., used for tracking within a certain interval occurring in one rotation of the disk are "preformatted", that is, recorded on the disk in advance.

Magnetic transfer methods realizing accurate and efficient preformatting, wherein the data such as a servo signal or the like borne on a master medium is magnetically transferred therefrom to a magnetic recording medium, have been proposed in, for example, Japanese Unexamined Patent Publication Nos. 63(1988)-183623, 10(1998)-40544, and 10(1998)-269566.

According to these magnetic transfer technologies: a master medium having an uneven pattern corresponding to the data that is to be transferred to a slave medium (a magnetic recording medium) is prepared. By bringing this master medium brought into close contact with a slave medium to form a conjoined body, and applying a transfer magnetic field thereto, a magnetic pattern corresponding to the data (e.g., a servo signal) borne on the master medium is transferred to the slave medium. The preformatting can be performed without changing the relative positions of the master medium and the slave medium- that is, while the two media remain stationary. Therefore not only is it possible to perform an accurate recording of the preformat data, it becomes possible to advantageously do so in an extremely short time.

In order to improve the quality of the magnetic transfer, it is necessary that the gap between the slave medium and the master medium be made uniform. Because it is difficult to maintain a gap of a uniform distance across the entirety of the respective surfaces, it is a general practice to conjoin the respective surfaces. Note that it is also important that uniform contact characteristics between the respective surfaces be maintained across the entirety thereof when this conjoinment is performed. That is to say, even if a contact deficiency appears on only one portion of said surface, said portion becomes a region in which a magnetic transfer can not be performed. If a magnetic transfer can not be performed, signal omissions occur in the magnetic data transferred to the slave medium and the signal quality thereof is reduced. For cases in which the transferred data is a servo signal, an adequate tracking function can not be obtained, whereby a problem arises in that the reliability is reduced.

As to means for improving the contact characteristics between the respective surfaces of the master medium and the slave medium, technology has bee proposed in Japanese Unexamined Patent Publication No. 7(1996)-78337, wherein, by use of a pressure contacting means formed of an elastic body that presses against the entirety of the rear surface of the master medium at a uniform pressure, the contact characteristics between the respective surfaces of the master medium and the slave medium are improved.

However, the master medium is usually produced by use of a lithography method, a stamping method or the like, and because master mediums formed by use of these methods have a bow that can be from in the tens of microns into the hundreds of microns, it is known that applying a uniform pressure across the entire surface thereof is difficult.

In this regard, in order to correct the bow of the master medium to realize a flat surface thereof so that a uniform pressure can be applied across the entirety of said surface, the inventors of the present invention have proposed, in Japanese Unexamined Patent Publication No. 2000-275838, a magnetic transfer apparatus wherein a vacuum adsorption system is introduced to a master medium stage, whereby the master medium is made flat.

However, even for cases in which master mediums having similar bows are used, there are superior and inferior grades in the flatness of each individual master medium, and it has become clear that there are master mediums of which a sufficient degree of flatness can not be obtained.

SUMMARY OF THE INVENTION

The present invention has been developed in consideration of the circumstances described above, and it is a primary object of the present invention to provide a magnetic transfer master medium and magnetic transfer method capable of reducing the signal omissions occurring in the magnetic transfer and improving the signal quality thereof.

The magnetic transfer master medium according to the present invention is a magnetic transfer master medium provided with a magnetic layer formed with a pattern for transferring data to the magnetic layer of a magnetic recording medium, wherein

the Young's modulus E of said magnetic transfer master medium is regulated by its thickness d; wherein, for a case in which a sample piece width of 1 m is defined, the bow stiffness = $Ed^3/12$ is in the range greater than or equal to 0.03 N $\cdot$ $m^2$ and less than or equal to 27 N $m^2$.

Note that, here, the Young's modulus is a value measured and obtained by a vibration reed method. A rectangular sample having a length L = 50 mm and a thickness d is cut from the master medium, and one end thereof is fixed. This rectangular sample, in the state wherein one end thereof has been fixed in place, is then bombarded with vibrations, and a resonance frequency f is measured. It is known that the Young's modulus E has a relation with the resonance frequency f expressed as follows:

$$E = 3\rho f^2 \, (4\pi L^2/\alpha d)^2$$

The Young's modulus E is computed by use of this relational formula. Note that here, $\rho$ refers to the density, and $\alpha$ is a coefficient (1.875). By inserting this Young's modulus E, the sample side width b, and the thickness d into the formula below, the bow stiffness can be obtained:

$$\text{Bow stiffness} = Ebd^3/12$$

The present invention has regulated the bow hardness to the optimal range for a case in which the sample piece width has been defined as 1 m.

The magnetic transfer master medium according to the present invention is formed from a substrate of which the value of the bow stiffness = $Ed^3/12$ for a sample piece having a width of 1 m is in the range greater than or equal to 0.03N $\cdot$ $m^2$ and less than or equal to 27 N $\cdot$ $m^2$. By making this bow stiffness less than or equal to 27 N $\cdot$ $m^2$, the flattening of the master medium when a vacuum adsorption system has been introduced can be further promoted when the master medium is conjoined with a magnetic recording medium, and the contact characteristics between the master medium and the magnetic recording medium can be improved. Further, by making this bow stiffness greater than or equal to 0.03 N $\cdot$ $m^2$, the problem arising when the vacuum adsorption system is introduced, wherein the shape of the portion of the master medium subjected to the suction deforms, leading to a degradation of the contact characteristics between the master medium and the magnetic recording medium, can be avoided, whereby a favorable degree of contact can be maintained.

If the master medium according to the present invention is employed, a magnetic transfer can be performed wherein the contact state between the master medium and the magnetic recording medium is favorable, the occurrence of signal omissions in the transferred data can be controlled, and the signal quality improved.

BRIEF DESCRIPTION OF THE DRAWINGS

Figure 1 is a perspective view of a slave medium and a master medium,
Figures 2A, 2B, and 2C are drawings illustrating the basic processes of a magnetic transfer method,
Figure 3 is a perspective view of the main part of a magnetic transfer apparatus for performing a magnetic transfer utilizing a master medium according to the present invention,
Figure 4 is a perspective exploded view of the conjoined body shown in Fig. 3.

DESCRIPTION OF THE PREFERRED EMBODIMENTS

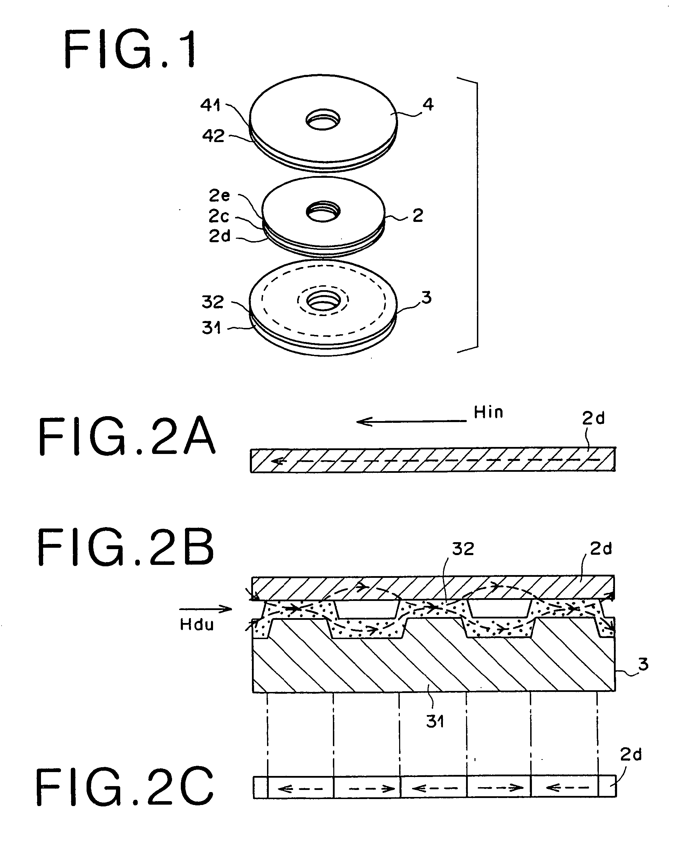

Hereinafter the preferred embodiments of the present invention will be explained in detail with reference to the attached drawings. First, the basic processes of performing a magnetic transfer employing the master medium according to the present invention to a slave medium (a magnetic recording medium) will be explained based on Figs. 1, 2A, 2B, and 2C.

Fig. 1 is a perspective view of a slave medium 2, and master mediums 3 and 4. The slave medium 2 is a disk shaped magnetic recording medium such as a high-density flexible disk, a hard disk that can be utilized in a hard disk apparatus, or the like, and comprises a magnetic layer 2c, and a magnetic layer 2d, respectively, formed on each of the two surfaces of a disk shaped non-magnetic base 2c.

Further, each of the master mediums 3, 4 are formed of a hard material in a form of a disk, and is provided on one surface thereof with a transfer data bearing surface on which a micro uneven pattern for being conjoined with the recording surfaces 2d, 2e of the slave medium 2 has been formed. Each of master mediums 3, 4 have an uneven pattern formed corresponding to the upper recording surface 2d or the lower recording surface 2e, respectively, of the slave medium 2. Taking the master medium 3 as an example, the uneven pattern, shown in the area enclosed by the dotted line in the drawing, is formed in the donut shaped region. Note that although the master mediums 3, 4 shown in Fig. 1 comprise a substrate 31, 41, respectively, on which the respective uneven patterns have been formed, and soft magnetic layers 32, 42, formed on the respective uneven patterns, for cases in which the substrates 31, 41 are formed of ferromagnetic material such as Ni or the like, is possible to perform the magnetic transfer by use of the only the substrate, and it is not necessarily required that the soft magnetic layers 32, 42 be formed thereon. However, by providing a magnetic layer having favorable transfer characteristics, a more favorable magnetic transfer can be performed. Note that the soft magnetic layers must be provided if the substrates are formed of a non-magnetic material.

Still further, if a protective film such as Diamond-Like Carbon (DLC) or the like is coated on the topmost layer, this protective film improves the contact durability, enabling the performance of multiple magnetic transfers. Also, a silicon layer applied by a sputtering process or the like can be provided as an under layer of the DLC protective layer in order to improve the contact characteristics.

Figs. 2A, 2B, and 2C are drawings illustrating the basic processes of the magnetic transfer method utilizing the master medium according to the present invention. Fig. 2A illustrates the process wherein a magnetic field is applied in one direction and the slave medium is initially magnetized with direct current magnetic field. Fig. 2B illustrates the process wherein the master medium and the slave medium are brought into close contact and a magnetic field is applied in the direction opposite to that in which the initial magnetic field was applied. Fig. 2C illustrates the state after the magnetic transfer has been performed. Note that in Figs. 2A, 2B, and 2C, as to the slave medium 2, only the lower face recording surface 2d thereof is shown.

The basic outline of the magnetic transfer method is as follows. A shown in Fig. 2A, first, an initial magnetic field Hin is applied to the slave medium 2 in one direction of the track direction; whereby the initial magnetization of the slave medium (direct current magnetization; Him) is effected. Then, as shown in Fig. 2B, the recording surface 2d of the slave medium 2 and the transfer data bearing face of the master medium 3, which is the micro uneven pattern formed on the substrate 3a coated with the magnetic layer 32, are brought into close contact, and a transfer magnetic field (Hdu) is applied in the track direction of the slave medium 2 opposite the direction in which the initial magnetic field (Hin) was applied, whereby the magnetic transfer is carried out. As a result, the data (a servo signal, for example) corresponding to the uneven pattern of the data bearing surface of the master medium 3 is magnetically transferred and recorded on the magnetic recording surface (the track) of the slave medium 2, as shown in Fig. 2C. Here, an explanation has been given for the lower face recording surface 2d of the slave medium and the lower master medium 3; however, as shown in Fig. 1, the upper face recording surface 2e and the upper master medium 4 are brought into close contact and the magnetic transfer is performed in the same manner. The magnetic transfer to the upper and lower face recording surfaces 2d and 2e of the slave medium 2 can be performed concurrently, or sequentially one surface at a time.

Further, even for cases in which the uneven pattern of the master medium 3 is a negative pattern, the opposite to that of the positive pattern shown in Fig. 2B, by reversing the above described directions in which the initial magnetic field (Hin) and the transfer magnetic field (Hdu) are applied, the same data can be magnetically transferred and recorded. Note that as to the initial magnetic field and the transfer magnetic field, it is necessary that a value therefor be determined based on a consideration of the coercive magnetic force of the slave medium 2, and the relative magnetic permeability of the master and slave mediums.

Hereinafter, the master medium according to the present invention and the slave medium will be explained in more detail.

As described above, the master medium basically comprises a substrate having an uneven pattern formed on the surface thereof, and a soft magnetic layer formed over said uneven pattern.

A synthetic resin, a ceramic material, an alloy, aluminum, glass, quartz, silicon, nickel, or the like is used to form the substrate of the master medium. The uneven pattern can be formed by use of a stamping method, a photolithography method, or the like. It is preferable that the depth (the height of the protrusions) of the uneven pattern formed on the substrate be in the range of 80-800 nm; and more preferably, in the range of 150-600 nm. For cases in which this uneven pattern is that of a servo signal, said pattern is formed longer in the radial direction thereof. For example, it is preferable that the length in the radial direction be 0.05-20 μm, and 0.05-5 μm in the circumferential direction. It is preferable that a pattern of this type, in which the length in the radial direction is longer and within this range, is selected as the pattern for bearing servo signal data.

Further, as to the material forming the soft magnetic layer, Co, a Co alloy (CoNi, CoNiZr, CoNbTaZr, or the like), Fe, an Fe alloy (FeCo, FeCoNi, FeNiMo, FeAlSi, FeAl, FeTaN), Ni, a Ni alloy (NiFe), or the like can be employed therefor. It is particularly preferable that FeCo or FeCoNi be employed. This soft magnetic layer is formed of a magnetic material by use of a vacuum layer forming means such as a vacuum deposition method, a sputtering method, an ion plating method, or by a metal plating method, etc. It is preferable that the thickness of the soft magnetic layer be in the range of 50-500 nm, and even more preferably, in the range of 150-400 nm.

Note that the magnetic transfer master medium according to the present invention is formed so that the value of the Bow stiffness = $Ebd^3/12$

for a sample piece thereof, having a length L = 50 mm, an arbitrary width b, and a thickness d, with the Young's modulus E derived by a vibration reed method for a sample having a width of 1m and an arbitrary length, is in the range greater than or equal to $0.03 N \cdot m^2$ and less than or equal to $27 N \cdot m^2$. Here, the master medium comprises a substrate and a soft magnetic layer formed thereon, wherein the thickness d refers to the distance from the bottom surface of the substrate to the bottom surface of the depression portion of the uneven pattern (the bottom surface of the depression portion of the soft magnetic layer).

As to the slave medium 2, a disk shaped magnetic recording medium such as a hard disk, an flexible disk or the like can be employed thereas. A magnetic recording layer thereof is formed by coating a layer of magnetic material, or by forming a thin metallic magnetic film recording layer on the surface thereof. As to the material forming the thin metallic magnetic film recording layer, Co, a Co alloy (CoPtCr, CoCr, CoPtCrTa, CrNbTa, CoCeB, CoNi or the like), Fe, or an Fe alloy (FeCo, FeP, FeCoNi) can be employed therefor. Note that it is preferable that a non-magnetic sub layer be provided so as to provide the magnetic anisotropy required beneath the magnetic material (on the support body side thereof). The crystalline structure and a lattice coefficient of the non-magnetic sub layer must be matched to that of the magnetic recording layer. To this end, Cr, CrTi, CoCr, Crta, CrMo, NiAl, Ru, Pd or the like is employed.

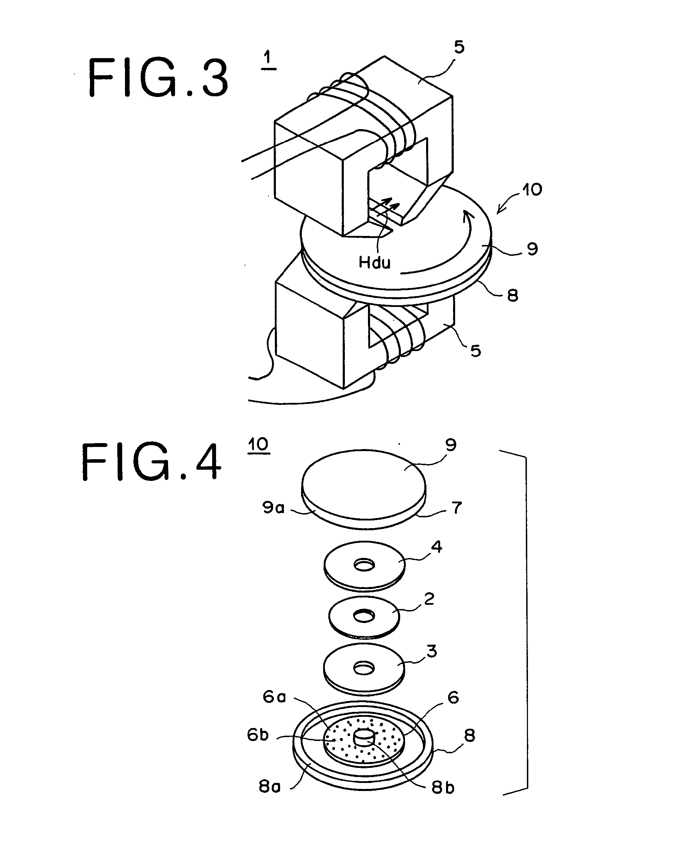

Hereinafter a specific magnetic transfer method will be explained. Fig. 3 is a perspective view of the main part of a magnetic transfer apparatus implementing the magnetic transfer method according to the present invention. Fig. 4 is an exploded perspective view of the conjoined body that is to be inserted into the magnetic transfer apparatus.

The magnetic transfer apparatus 1 shown in Figs. 3 and 4 is a magnetic transfer apparatus that performs a double sided simultaneous transfer. The master mediums 3 and 4 are brought into close contact under pressure with the upper and lower recording surfaces of the slave medium 2, respectively, to form a conjoined body 10. While said conjoined body 10 is being rotated, a transfer magnetic field is applied thereto by an electromagnetic apparatus 5 (a magnetic field generating apparatus) disposed above and below the conjoined body 10. Thereby the data born on the master mediums 3 and 4 is transferred to both the respective upper and lower face of the slave medium 2 concurrently.

The conjoined body 10 comprises a lower master medium 3 for transferring data such as a servo signal or other data to the lower recording surface 2d of the slave medium 2; an upper master medium 4 for transferring data such as a servo signal or other data to the upper recording surface 2e of the slave medium 2; a lower pressure conjoining member 8 provided with a lower correcting member 6 for adsorbing the lower-face master medium 3 and correcting the flatness thereof; an upper pressure conjoining member 9 provided with an upper correcting member 7 (of the same configuration as the lower correcting member 6) for adsorbing the upper-face master medium 4 and correcting the flatness thereof. Pressure is applied to these while in the state in which the respective center portions thereof have been matched, and the lower master medium 3 and the upper master medium 4 are brought into close contact with the respective upper and lower recording surfaces of the slave medium 2.

The surfaces of the lower master medium 3 and the upper master medium 4 opposite the faces thereof on which the micro uneven pattern has been formed are vacuum adsorbed by the lower correcting member 6 and the upper correcting member 7, respectively, When necessary, in order to improve the contact characteristics between the slave medium 2 and the lower master medium 3 and the upper master medium 4, fine pores are provided that penetrate through the master mediums at positions other than those on which the micro uneven pattern has been formed and on positions not communicating with the suction pores (described below) of the lower correcting member 6 and the upper correcting member 7. The air between the close contact surfaces of the slave medium 2 and the surfaces of the respective master mediums is suctioned out and expelled. At this time, because the air between the slave medium 2 and the contours of the uneven pattern such as that described above formed on the master medium according to the present invention is completely suctioned out and expelled, the contact characteristics are extraordinarily good.

The lower correcting member 6 (of the same configuration as the upper correcting member 7) is provided in the form of a disk corresponding to the size of the master medium 3, and an adsorption surface 6a finished so as to have an average surface roughness of Ra 0.01-0.1 μm at the center line thereof is provided as the surface thereof. This adsorption surface 6a is provided with approximately 25-100 suction pores 6b having a diameter of 2 mm or less and which have been opened substantially uniformly across said adsorption surface 6a. Although not shown in the drawing, these suction pores 6b are connected to a vacuum pump via a suction channel that extends from the interior portion of the lower correcting member 6 to the exterior portion of the lower-face pressure conjoining member 8. The suction pores 6b adsorb, under the force of vacuum suction, the back surface of the master medium 3 that has been brought into close contact with the adsorption surface 6a, and corrects the flatness of said master medium 3 so that said flatness parallels that of the adsorption surface 6a.

The lower pressure conjoining member 8 and the upper pressure conjoining member 9 are formed into disks. Either one or both of the lower pressure conjoining member 8 and the upper pressure conjoining member 9 are movable in the axial direction so as to open and close, by an opening/closing mechanism (a pushing mechanism, a fastening mechanism, or the like) which is not shown in the drawing. The lower and upper pressure conjoining members 8 and 9 are conjoined with each other by a predetermined pressure. On the outer circumference of the lower pressure conjoining member 8 and the upper pressure conjoining member 9 are provided flange portions 8a and 9a, respectively. Said flange portions 8a and 9a are brought into contact with each other when the closing operation is performed so as to hermetically seal the inner portion thereof. A protrusion 8b is formed on the center portion of the lower-face pressure conjoining member 8, which couples with the central aperture of the slave medium 2 so as to align the positions thereof. Further, the lower pressure conjoining member 8 and the upper pressure conjoining member 9 are connected to a rotating mechanism (not shown) and are rotated thereby as an integral unit.

In order to perform the magnetic transfer operation on a plurality of slave mediums using a single pair of a lower master medium 3 and an upper master medium 4, with regard to the conjoined body 10: the center positions of the respective adsorption surfaces 6a of the lower correcting member 6 and the upper correcting member 7 are matched, and the lower master medium 3 and the upper master medium 4 are vacuum adsorbed and held by the respective adsorption surfaces. The setting and replacing of the slave medium is performed while the lower-face pressure conjoining member 8 and the upper-face pressure conjoining member 9 are in the separated state. After the center position of the slave medium 2, to which an initial magnetic field has been applied in advance in one direction of the track direction, is aligned, and said slave medium 2 is set, the lower-face pressure conjoining member 8 and the upper-face pressure conjoining member 9 are brought together and closed, whereby the master mediums 3 and 4 are brought into close contact with the respective recording surfaces of the slave medium 2 to form a conjoined body 10. Then, by the movement of the upper and lower electromagnetic apparatuses 5 or the movement of the conjoined body 10, upper and lower electromagnetic apparatuses 5 are made to approach the respective the upper and lower faces of the conjoined body 10. While said conjoined body 10 is being rotated, the transfer magnetic field Hdu is applied in the direction opposite that in which the initial magnetic field was applied to the slave medium 2. The data borne by the uneven pattern surface of the lower master medium 3 and the upper master medium 4 is transferred to the respective recording surface of the slave medium 2 by the application of this transfer magnetic field.

If the master medium having a regulated bow stiffness according to the present invention as described above is used, when vacuum adsorption is used to conjoin the master and slave mediums, advantageous contact characteristics therebetween can be obtained, whereby the occurrence of signal omissions when the magnetic transfer is performed can be prevented, and the quality of the transfer can be improved.

Note that here, although an explanation of an embodiment wherein the magnetic transfer has been performed concurrently for both recording surfaces of the slave medium, the transfer can also be performed sequentially, one recording surface at a time. Note that an effect whereby the position determination between the master and slave mediums is facilitated is obtained by use of the single-face transfer.

Next, the results of an actual experiment to determine the transfer accuracy of a magnetic transfer performed utilizing the magnetic transfer master medium according to the present invention will be explained.

The slave medium utilized in the experiment was formed in a vacuum film forming apparatus (a Shibaura Mechatronix: S-50s sputtering apparatus), under conditions wherein Argon has been introduced after depressurization at room temperature to $1.33 \times 10^{-5}$ Pa ($10^{-7}$ Torr) and the pressure is 0.4 Pa ($3 \times 10^{-3}$ Torr) . A glass plate was heated to 200 °C, a 300 nm NiFe layer that serves as the rear impact layer formed by the soft magnetic layer, a 30 nm layer of Ti that serves as the non-magnetic sub layer, and a 30 nm layer of CoCrPt that serves as the magnetic recording layer were sequentially formed thereon to produce a 3.5" disk shaped magnetic recording medium having a saturation magnetization Ms of 5.9T (4700 Gauss), and a magnetic coercive force Hcs of 199 kA/m (2500 Oe).

The evaluation of the accuracy of the transfer was performed based on the number of places in which signal omissions occurred. A magnetic developing fluid (Sigma Phi Chemicals Sigmarker-Q) was diluted to 1/10th concentration. Said magnetic developing liquid was dripped onto the recording surface of the slave medium on which a magnetic transfer has been performed, dried, and the amount of change to the developed magnetic transfer signal portion is evaluated. One hundred random viewing fields of the portion of the recording surface of the slave medium on which the magnetic transfer has been performed were observed at a 50 times magnification by use of a differential coherence microscope; if less than five locations therein were found to have signal omissions, the evaluation was favorable (indicated by an "O"), and if five or more locations therein were found to have signal omission, the transfer was evaluated as deficient (indicated by an "X"). Note that there were cases in which a plurality of signal omissions was present within a signal viewing field.

Hereinafter, examples 1-4 and comparative examples 1 and 2, each of which was employed as a master medium will be explained. Each of the master mediums were manufactured by use of a stamping method or lithography technology, and comprises a substrate on the surface of which an uneven pattern is formed of radial lines spaced at equivalent intervals in the range of 20-40 mm in the radial direction from the center of the disk; wherein the line interval is a 0.5 μm interval at the position of the innermost circumference, which is at the position 20 mm in the radial direction from the center of the disk.

The master medium of example 1 comprises a disk shaped Ni substrate formed by a stamping method, on which a soft magnetic layer composed of FeCo 30at% has been formed by use of a sputtering method. Note that the soft magnetic layer is formed by a sputtering method under conditions wherein the Argon sputtering pressure is 1.5 x $10^{-1}$ Pa (1.08 m Torr), and the electrical current introduced is 2.80 W/cm$^2$. Further, the master medium of the current experiment is formed so that the master medium thickness d = 0.3 mm. Note that, here, the master medium thickness d refers to the distance from the bottom surface of the substrate to the bottom surface of the depression portion of the uneven pattern of the soft magnetic layer (the same holds true for the master mediums explained below).

The master medium of example 2 is a master medium comprising a disk shaped Ni substrate formed by a stamping method in the same manner as the master medium of example 1, and on which a soft magnetic layer composed of FeCo 30at% has been formed by use of a sputtering method. However, the master medium of the current experiment is formed so that the master medium thickness d = 0.15 mm.

The master medium of example 3 is a master medium comprising a disk shaped Ni substrate formed by a stamping method in the same manner as the master medium of example 1, and on which a soft magnetic layer composed of FeCo 30at% has been formed by use of a sputtering method. However, the master medium of the current experiment is formed so that the master medium thickness d = 0.5 mm.

The master medium of example 4 is a master medium comprising a disk shaped quartz substrate on which an uneven pattern has been formed by use of a lithography technology, on which a soft magnetic layer composed of FeCo 30at% has been formed by use of a sputtering method in the same manner as the master medium of example 1. Note that the master medium of the current experiment is formed so that the master medium thickness d = 0.9 mm.

The master medium of comparative example 1 is a master medium comprising a disk shaped Ni substrate formed by a stamping method, and on which a soft magnetic layer composed of FeCo 30at% has been formed by use of a sputtering method in the same manner as the master medium of example 1. However, the master medium of the current comparative example is formed so that the master medium thickness d = 0.08 mm.

The master medium of comparative example 2 is a master medium comprising a disk shaped quartz substrate on which an uneven pattern has been formed by use of a lithography technology in the same manner as the master medium of example 4, and on which a soft magnetic layer composed of FeCo 30at% has been formed by use of a spin coat method in the same manner as the master medium of example 1. However, the master medium of the current comparative example is formed so that the master medium thickness d = 1.2 mm.

A magnetic transfer to the slave medium described above was performed utilizing each of the master mediums of each of the examples and comparative examples described above, and the accuracy thereof was evaluated based upon the number of signal omissions occurring in the data transferred to the slave medium. The results thereof are shown in Chart 1. Note that the Chart 1 shows the bow stiffness of a sample piece of each master medium having width defined to be 1m, which has been obtained by utilizing the Young's modulus E derived by use of a vibration reed method, and the thickness d of the material of each master medium. The master mediums of the examples 1-4 have a bow stiffness which is within the range regulated according to the present invention, and the master mediums of the comparative examples have a bow stiffness value which falls outside said range.

| Chart 1 | | | | |
|---|---|---|---|---|
| | Thickness d (mm) | Bow stiffness (Nm$^2$) of a 1m wide sample | Signal Omissions (number of) | Evaluation |
| Example 1 | 0.3 | 0.45 | 2 | O |
| Example 2 | 0.15 | 0.06 | 1 | O |
| Example 3 | 0.5 | 2.08 | 2 | O |
| Example 4 | 0.9 | 12.15 | 2 | O |
| Comparative Example 1 | 0.08 | 0.009 | 143 | X |
| Comparative Example 2 | 1.2 | 28.8 | 53 | X |

As shown in Chart 1, for cases in which any of the master mediums of Examples 1-4 are used, the number of signal omissions is extraordinarily small, 1 or 2, and the contact accuracy is favorable. On the other hand, for cases in which the master mediums of Comparative Examples 1 and 2 are used, the number of signal omissions is extraordinarily large, that is to say, the contact accuracy is deficient.

**Claims**

1. A magnetic transfer master medium provided with a magnetic layer formed in a pattern for transferring data to the magnetic layer of a magnetic recording medium, wherein

   the Young's modulus E of said magnetic transfer master medium is regulated by the thickness d, and
   a bow stiffness = $Ed^3/12$ is in the range greater than or equal to 0.03 N · $m^2$ and less than or equal to 27 N · $m^2$ for a case in which a sample piece is defined as having a 1 m width.

2. A magnetic transfer master medium as defined in claim 1, wherein

   said Young's modulus E is obtained by measurement with a vibration reed method by cutting a rectangular sample having a length L = 50 mm and a thickness d from the master medium;
   one end thereof is fixed;
   said rectangular sample, in the state wherein one end thereof has been fixed in place, is then bombarded with vibrations;
   a resonance frequency f is measured; and
   then the Young's modulus E is computed from the equation:

   $$E = 3\rho f^2 \, (4\pi L^2/\alpha d)^2$$

   wherein $\rho$ refers to the density, and $\alpha$ is a coefficient (1.875).

3. A magnetic transfer master medium as defined in claim 1, wherein said master medium comprises

   a substrate having a pattern on a surface thereof that corresponds to said data; and
   a magnetic layer provided on at least the surfaces of the protrusion portions on said substrate; wherein

   said magnetic layer provided on said surfaces of said protrusion portions constitute said magnetic layer formed in a pattern.

4. A magnetic transfer master medium as defined in claim 1, wherein said data are servo signals.

5. A magnetic transfer master medium as defined in claim 2, wherein said master medium comprises

   a substrate having a pattern on a surface thereof that corresponds to said data; and
   a magnetic layer provided on at least the surfaces of the protrusion portions on said substrate; wherein

   said magnetic layer provided on said surfaces of said protrusion portions constitute said magnetic layer formed in a pattern.

6. A magnetic transfer master medium as defined in claim 2, wherein said data are servo signals.

7. A magnetic transfer master medium as defined in claim 3, wherein said data are servo signals.

8. A magnetic transfer master medium as defined in claim 5, wherein said data are servo signals.

# FIG.1

# FIG.2A

# FIG.2B

# FIG.2C

EP 1 258 866 A2

# FIG.3  1

# FIG.4  10

10